# FASCICULE DE BREVET EUROPEEN

(11) **EP 2 589 299 B1**
(45) Date de publication et mention de la délivrance du brevet: **03.05.2017**
(21) Numéro de dépôt: 12290363.6
(22) Date de dépôt: 24.10.2012
(51) Int. Cl.: A23L 33/20, A23L 27/60

(54) **Sauce alimentaire de type mayonnaise sans huile sans oeuf**
Lebensmittelsoße vom Typ Mayonnaise ohne Öl und ohne Ei
Egg-free, oil-free mayonnaise-like edible sauce

(30) Priorité: 04.11.2011 FR 1103370
(43) Date de publication de la demande: 08.05.2013
(73) Titulaire: Alips SARL, 60200 Compiègne (FR)
(72) Inventeur: Sujkowski, Patrick, 60200 Compiègne (FR)

(56) Documents cités:
- EP-A2- 0 758 531
- WO-A1-2007/063084
- JP-A- 2008 237 195
- JP-A- 2010 057 375
- anonymous: "Mayonnaise shaker tupperware (rapide et sans oeufs ni huile)", , 23 août 2011 (2011-08-23), XP002678120, Extrait de l'Internet: URL:http://cuisinedegael67.over-blog.com/a rticle-mayonnaise-shaker-tupperware-rapide -et-sans-oeufs-ni-huile-82227929.html [extrait le 2012-06-18]

## Description

La présente invention concerne une sauce alimentaire de type mayonnaise et son procédé de préparation.
Elle concerne également les préparations alimentaires qui comprennent une telle sauce.
La sauce mayonnaise est une sauce froide consistante utilisée fréquemment dans le domaine alimentaire qui sert à accompagner de nombreux plats, ou à en réaliser certains.Cette sauce est habituellement composée d'une émulsion d'huile et de jaune d'oeuf, accompagnée, selon les goûts du consommateur, de condiments (sel, poivre...), de moutarde, de vinaigre et/ou solution d'acide acétique.
Elle peut aussi être utilisée dans un simple but de décoration de par son aspect visuel et sa texture, néanmoins c'est son goût qui est l'élément le plus recherché pour accompagner toutes sortes de plats. La présence de jaune d'oeuf et d'huile sont deux freins à sa consommation.

Les mayonnaises classiques peuvent entrainer une hausse du taux de cholestérol ainsi qu'un apport trop conséquent en graisse saturée, représentant ainsi un risque cardiovasculaire et entre dans la composition des calculs de la vésicule biliaire. Ainsi la consommation même à faible quantité peut être déconseillée pour certaines catégories de personnes en particulier celles qui doivent suivre un régime «hypocholestérolémiant».
Pour les personnes porteuses de gastrite, de troubles du fonctionnement de la vésicule biliaire (vésicule paresseuse, hypertonique, calculs biliaires) ou ayant subi une choleczotecmie (suppression de la vésicule biliaire) elles peuvent s'avérer indigestes. Elles peuvent encore provoquer des allergies chez les gens prédisposés d'eczéma, urticaire, asthme, diarrhée, migraine...
L'huile est utilisée à hauteur d'environ 70% dans une mayonnaise classique. Toutes les huiles contiennent 100% de lipides (graisses) et apportent 900Kcal au 100 grammes quelle que soit l'huile utilisée : colza, arachide, olive, etc...C'est donc un aliment extrêmement riche en calories.

Le but de la présente invention est de proposer un produit alimentaire ayant sensiblement la consistance, le goût et l'aspect de la sauce mayonnaise, mais qui ne contient ni d'oeuf (jaune ou blanc d'oeuf) ni d'huile.
Un autre but de l'invention est de proposer une sauce alimentaire de type mayonnaise qui limite les risques d'intolérances pour l'organisme, ainsi que l'apport de calories et qui, par le fait, soit accessible à un plus grand nombre de personnes.
Le problème est qu'une mayonnaise est une émulsion c'est à dire : de la protéine avec de l'huile.
La protéine est généralement du jaune d'oeuf que l'on veut supprimer ainsi que l'huile et cela pour les problèmes de santé. Il n'y a donc plus de mayonnaise possible car c'est cette émulsion qui donne cette texture et cet aspect si caractéristiques à la mayonnaise le goût étant apporté principalement par la moutarde, le vinaigre, les épices...

La solution apportée à ce problème a donc été la suivante.
Tout d'abord supprimer le jaune d'oeuf et remplacer l'huile 900Kcal au 100grammes par de l'eau 0Kcal. Puis texturer l'eau pour lui donner l'aspect et la consistance d'une mayonnaise.
On peut remplacer l'eau par un lait de soja ou un autre liquide de type bouillon si l'on souhaite donner un goût spécifique à cette mayonnaise.
Il existe une multitude d'ingrédients permettant de modifier l'état liquide de l'eau :
- Les farines, de blé, de maïs, de riz, de sarrasin, de manioc etc...
- Les gélifiants, gélatine, gelée, existant d'algue, pectine, xanthane, gomme de guar etc...
- Les fibres, de blé, de maïs, de carotte, de bambou etc...
- Les protéines de soja, de poix, de lupin, de blé etc...

Chacun de ces ingrédients utilisés même seuls peuvent épaissir plus ou moins l'eau et changer sa texture suivant le dosage utilisé.
Mais aucun de ces ingrédients utilisés seuls ne peut donner l'aspect et la texture d'une mayonnaise. C'est en utilisant plusieurs ingrédients, en jouant sur leurs complémentarités et leurs synergies que l'on peut imiter une mayonnaise.
La mayonnaise a une texture ferme onctueuse et d'aspect brillant plusieurs ingrédients permettent d'obtenir cette texture : certains amidons de maïs, amidons de riz, amidons de manioc, fécule de pomme de terre et gélifiants permettent d'avoir une texture d'aspect gras.
Des mélanges «amidons de maïs plus amidons de riz» ou «amidon de maïs plus fécule de pommes de terre plus gélatine» ou «amidon de riz plus amidon de manioc» ont donné d'excellents résultats.
Il a toutefois été retenu le mélange «amidon de riz plus amidon de manioc» qui apporte la texture et l'aspect gras et brillant au produit. Il a été retenu également de n'utiliser que des amidons à cuire car cette sauce n'utilise pas d'huile mais de l'eau. Le fait de la porter à ébullition permet d'obtenir une bonne conservation après refroidissement.

Au mélange «amidon de riz plus amidon de manioc» il a été ajouté de la fibre pour parfaire la texture. Plus que l'origine de la fibre c'est la granulométrie qui est importante.
Une granulométrie trop grosse se sentira en bouche. Il a été retenu une fibre de carotte fine.
A ce mix a été rajouté de la protéine de lupin pour son pouvoir colorant jaune et son pouvoir texturant. Pour le goût de cette sauce il faut se rappeler qu'il n'y a pas d'huile et l'huile modifie le goût.
En effet si on fait une vinaigrette habituelle et que l'on remplace les cuillères d'huile par des cuillères d'eau, la vinaigrette devient immangeable car trop forte.
Pour la sauce type mayonnaise il en va de même. Cette sauce est donc très peu salée pour des raisons de santé publique, puis la quantité de moutarde et du vinaigre est moindre que pour une mayonnaise normale mais surtout on y ajoute un édulcorant ou du sucre pour contrer l'acidité excessive.
Dans notre cas nous avons retenu un édulcorant pour limiter les calories. Puis nous avons rajouté un arôme pour parfaire le goût mais cela est facultatif. Comme dans une mayonnaise classique on peut remplacer le vinaigre par du citron ou un acide acétique ou citrique et y ajouter des épices, substances aromatisantes ou condiments et jouer avec les moutardes et vinaigres pour changer de goût.

Cette sauce a été pensée pour une fabrication industrielle, la seule difficulté de préparation pour une ménagère est l'achat des ingrédients en petite quantité.
Dans un cadre industriel : tous les ingrédients sont mélangés ou mixés ensemble et portés à ébullition puis conditionnés. Le choix des outils est économique selon les quantités fabriquées, tel ou tel outil de production sera plus ou moins rentable.
il est possible de réaliser cette sauce en utilisant des amidons à froid et de ne pas porter la sauce à ébullition mais cela impose de vérifier constamment la qualité de l'eau.

La solution de porter la sauce à ébullition a été retenue car jugée plus simple et plus sûre d'un point de vue bactériologique.
Pour des raisons commerciales il est possible d'ajouter des conservateurs et des Colorants. Tous les constituants qui entrent dans la composition de la sauce alimentaire selon l'invention devront être autorisés dans leurs natures et leurs proportions par les normes et les réglementations en vigueur.

Cette sauce présente plusieurs avantages.
- Elle est très diététique, elle ne contient pas de cholestérol, pas d'huile, donc très peu de calories.
- Elle ne pose donc aucun problème de digestion.
- Cette sauce peut être congelée et à la décongélation son aspect, sa texture, et son goût restent identiques.
- Elle aura une bien meilleure tenue dans les environnements chauds qu'une mayonnaise classique.
- Cette sauce n'étant pas une émulsion elle ne peut s'appeler mayonnaise. Après interrogation auprès des services français compétents la réponse fût :
   «*Il convient de trouver une dénomination suffisamment descriptive du produit sans induire les consommateurs en erreur. Dans ce cadre un intitulé du genre «sauce façon (ou type) mayonnaise sans huile ni oeuf*»*, sous réserve de l'appréciation souveraine des tribunaux, respecte les dispositions réglementaires prévues dans le code de la consommation*»*.*
Evidemment un avis devra être demandé aux autorités compétentes de chaque pays. Cette sauce peut très bien être utilisée pour réaliser des préparations alimentaires plus complexes et ainsi figurer comme un élément de base.
Par exemple on pourra tout à fait l'utiliser, en association avec des épices et herbes hachées pour obtenir une sauce de type «tartare» ; dans le même ordre d'idée, il sera possible de l'employer pour obtenir des sauces de type «américaine, «aïoli», «béarnaise, etc...
La consistance, le goût et l'aspect des mayonnaises classiques sont les principaux attributs de cette sauce mayonnaise, de plus elle se tient très bien et ne tombe pas, même au bout de plusieurs jours à température ambiante.

La sauce alimentaire de type mayonnaise est caractérisée en ce qu'elle est constituée de liquides pour 75 à 90% en poids ; moutarde pour 1 à 10% en poids ; de vinaigre, jus de citron, acide acétique ou citrique ou un mélange de ces éléments pour 1 à 10% en poids ; d'amidons de manioc pour 1 à 30 % en poids ; d'amidon de riz pour 1 à 30% en poids ; de protéine de lupin pour 0 à 2% en poids ; d'arômes, substances aromatisantes ou similaires, condiments épices ou un mélange de ces éléments pour 0 à 5% en poids ; de fibres pour 0,25 à 3% en poids ; de sucres, édulcorants ou substances sucrantes pour 0 à 10% en poids.
La somme de ces différents constituants y compris le liquide étant égale à 100% en poids.

En ce qu'elle est constituée de liquide pour 82,1% en poids; moutarde pour 5% en poids ; de vinaigre, jus de citron, acide acétique ou citrique ou un mélange de ces éléments pour 5% environ en poids; d'amidon de manioc pour 3% environ en poids ; d'amidon de riz pour 3% environ en poids; de protéine de Lupin pour 0,75% environ en poids ; d'arômes, substances aromatisantes ou similaires, condiments, épices ou un mélange de ces éléments pour 0,9% en poids ; de fibres pour 0,25% en poids ; de sucre ou édulcorant ou substance sucrante pour 0,001% environ en poids.
La somme de ces différents constituants y compris le liquide étant égale à 100% en poids.

Si cette description suffit à obtenir le produit recherché cette sauce alimentaire de type mayonnaise pour un résultat parfait sera composée d'eau pour le liquide, de vinaigre d'alcool de cristal précisément, d'amidon de manioc précisément, de moutarde précisément, d'édulcorants précisément, d'amidons modifiés de riz précisément.
Le procédé de préparation de cette sauce alimentaire de type mayonnaise est caractérisé par le fait de texturer de l'eau, il sera nécessaire de mélanger tout les ingrédients pré-cités ensemble et de les porter à une température supérieure ou égale à 80°C.
Etat de la technique :
Le document D1 XP002678120 intitulé shaker tupperware révèle une recette de « Mayonnaise rapide et sans oeufs ni huile » qui serait rédigée notamment de la façon suivante :
   « *dans le shaker mettre 1 cuillere à soupe de moutarde (15ml)*, *1*/*2 couvercle (du shaker) de lait lait concentré NON SUCRE (150 ml) TRES FROID, 1*/*2 cc de sel, 1 pincée de poivrier (...)* (sic) »

D'autres documents D2, D3, D4, D5 référencés de la façon suivante :
- D2 : JP 2008 237195 A5 (Daicel Chem 9 octobre 2008 (2008-10-09)
- D3: EP 0 758 531 A2 (Hercules INC (US)) 19 février 1997 (1997-02-19)
- D4 : WO 2007/063084 A1 (Cargill INC (US) ; Sarneel Frans Johan (NL), Peremans Johan Uagusta Mar) 7 juin 2007 (2007-06-07)
- D5 : JP2010 057375 A (AJINOMOTO KK) 18 mars 2010 (2010-03-18), sont également connus.
D2 divulgue une sauce type mayonnaise qui ne comprend ni oeuf ni huile. La sauce comprend un microfilament semblable à la cellulose, de l'eau, de l'amidon, un acide organique et différents additifs.

D3 décrit des mayonnaises tout en utilisant de l'huile ce qui ne permet pas de répondre au problème technique présent dans la présente invention.

Seul un procédé ne reprend pas de l'huile mais utilise de la pectine (« LMA Pectine »). La pectine est un gélifiant qui apporte un gout « collant et pâteux » en bouche.

D4 décrit un substitut de matières grasses comprenant au moins un amidon de n-alkenyl succinate et au moins un polyol pouvant être utilisé dans des sauces alimentaires. Cependant D4 décrit systématiquement la présence d'huile.

D5 décrit une sauce de type mayonnaise comprenant 4-8% en masse d'amidon gélatinisé, et qui ne comprend pas d'huile. Cependant la composition comprend 3 à 10% en masse de blanc d'oeuf.

D1 D2 D3 D4 et D5 ne répondent pas à l'ensemble des problématiques que cherche à résoudre la présente invention.

## Revendications

1. Sauce alimentaire de type mayonnaise, **caractérisée en ce qu'**elle est constituée :
- Liquide : 75 à 90% en poids,
- Moutarde : 1 à 10% en poids,
- Vinaigre ou jus de citron ou acide acétique ou citrique ou un mélange de ces éléments : 1 à 10 % en poids,
- Amidon de manioc : 1 à 30 % en poids,
- Amidon de riz : 1 à 30% en poids,
- Protéine de Lupin : 0 à 2 % en poids,
- Arôme ou substance aromatisantes ou similaires ou condiments ou épices, ou un mélange de ces éléments : 0 à 5% en poids,
- Fibres : 0,25 à 3% en poids,
la somme de ces différents constituants étant égale y compris le liquide à 100% en poids.

2. Sauce alimentaire de type mayonnaise selon la revendication 1 **caractérisée en ce qu'**elle est constituée :
- Liquide : 82,1% en poids,
- Moutarde : 5% en poids,
- Vinaigre ou jus de citron ou acide acétique ou citrique, ou un mélange de ces éléments : 5% en poids,
- Amidon de manioc : 3% en poids,
- Amidon de riz : 3% en poids,
- Protéine de Lupin : 0,75% en poids,
- Arômes ou substances aromatisantes ou similaires ou condiments ou épices, ou un mélange de ces éléments : 0,9% en poids,
- Fibres : 0,25% en poids,
la somme de ces différents constituants y compris le liquide étant égale à 100% en poids.

3. Sauce alimentaire de type mayonnaise selon l'une quelconque des revendications 1 à 2 **caractérisée en ce que** le liquide utilisé est de l'eau.

4. Sauce alimentaire de type mayonnaise selon l'une quelconque des revendications 1 à 3 **caractérisée en ce que** le vinaigre est un vinaigre d'alcool cristal.

5. Sauce alimentaire de type mayonnaise selon l'une quelconque des revendications 1 à 4 **caractérisée en ce que** la substance sucrante soit un édulcorant.

6. Sauce alimentaire de type mayonnaise selon l'une quelconque des revendications 1 à 5 **caractérisée en ce que** l'amidon est un amidon modifié de riz.

7. Préparation alimentaire **caractérisée en ce qu'**elle comporte, à titre de constituant de base, la sauce de type mayonnaise selon l'une quelconque des revendications 1 à 6.

8. Procédé de préparation d'une sauce alimentaire de type mayonnaise selon l'une des revendications 1 à 6 **caractérisé en ce qu'**il consiste à mélanger tous les ingrédients ensemble et les porter à une température supérieure ou égale à 80°C.

## Patentansprüche

1. Lebensmittel-Sauce Mayonnaise. Es besteht aus:
Flüssigkeit: 75 bis 90 Gewichts-%
Senf: 1 bis 10 Gewichts-%
Essig oder Zitronesaft oder Essigsaüre oder Zitronensäure oder einer Mischung dieser Elemente : 1 bis 10 Gewichts-%
Maniokstärke : 1 bis 30 Gewichts-%
Reisstärke : 1 bis 30 Gewichts-%
Lupinprotein : 0 bis 2 Gewichts-%
Aromatisierende Substanzen oder Präparate oder Gewürze oder einer Mischung dieser Elemente : 0 bis 5 Gewichts-%
Fasern : 0,25 bis 3 Gewichts-%
wobei die Summe dieser Bestandteile 100 Gewichts-% ist.

2. Lebensmittel-Sauce Mayonnaise nach Anspruch Nr-1. Es besteht aus:
Flüssigkeit: 82,1 Gewichts-%
Senf: 5 Gewichts-%
Essig oder Zitronesaft oder Essigsaüre oder Zitronensäure oder einer Mischung dieser Elemente : 5 Gewichts-%
Maniokstärke : 3 Gewichts-%
Reisstärke : 3 Gewichts-%
Lupinprotein : 0,75 Gewichts-%
Aromatisierende Substanzen oder Präparate oder Gewürze oder einer Mischung dieser Elemente : 0,9 Gewichts-%
Fasern : 0,25 Gewichts-%
wobei die Summe dieser Bestandteile 100 Gewichts-% ist.

3. Lebensmittel-Sauce Mayonnaise die eine Verbindung gemäß irgendeinem der Ansprüche 1 bis 2 **dadurch gekennzeichnet, dass** die verwendete Flüssigkeit Wasser ist.

4. Lebensmittel-Sauce Mayonnaise die eine Verbindung gemäß irgendeinem der Ansprüche 1 bis 3 **dadurch gekennzeichnet, dass** der verwendete Essig Kristal-Alkohol-Essig ist.

5. Lebensmittel-Sauce Mayonnaise die eine Verbindung gemäß irgendeinem der Ansprüche 1 bis 4 **dadurch gekennzeichnet, dass** der süssenden Stoff ein Süßungsmittel ist.

6. Lebensmittel-Sauce Mayonnaise die eine Verbindung gemäß irgendeinem der Ansprüche 1 bis 5 **dadurch gekennzeichnet, dass** der Stärke ein modifirzierter Reisstärke ist.

7. Nahrungsmittelprodukt enthaltend das Lebensmittel-Sauce Mayonnaise die eine Verbindung gemäß irgendeinem der Ansprüche 1 bis 6 **dadurch gekennzeichnet**.

8. Verfahren zur Herstellung des Lebensmittel-Sauce Mayonnaise die eine Verbindung gemäß irgendeinem der Ansprüche 1 bis 6 **dadurch gekennzeichnet, dass** es darin besteht alle Zutaten zusammen mischen und auf eine Temperatur grösser oder gleich von 80°C bringen.

## Claims

1. Mayonnaise-like edible sauce, **characterised in that** it is constituted from:
- Liquid: 75 to 90 wt.%,
- Mustard: 1 to 10 wt.%,
- Vinegar or lemon juice or acetic or citric acid, or a mixture of said elements: 1 to 10 wt.%,
- Cassava starch: 1 to 30 wt.%,
- Rice starch: 1 to 30 wt.%,
- Lupin protein: 0 to 2 wt.%,
- Flavouring or flavouring substances or similar, or condiments or spices, or a mixture of said elements: 0 to 5 wt.%,
- Fibres: 0.25 to 3 wt.%,
the sum of said different ingredients, including the liquid, being equal to 100 wt.%.

2. Mayonnaise-like edible sauce according to claim 1, **characterised in that** it is constituted from:
- Liquid: 82.1 wt.%,
- Mustard: 5 wt.%,
- Vinegar or lemon juice or acetic or citric acid, or a mixture of said elements: 5 wt.%,
- Cassava starch: 3 wt.%,
- Rice starch: 3 wt.%,
- Lupin protein: 0.75 wt.%,
- Flavourings or flavouring substances or similar, or condiments or spices, or a mixture of said elements: 0.9 wt.%,
- Fibres: 0.25 wt.%,
the sum of said different ingredients, including the liquid, being equal to 100 wt.%.

3. Mayonnaise-like edible sauce according to any one of claims 1 to 2, **characterised in that** the liquid used is water.

4. Mayonnaise-like edible sauce according to any one of claims 1 to 3, **characterised in that** the vinegar is a distilled white vinegar.

5. Mayonnaise-like edible sauce according to any one of claims 1 to 4, **characterised in that** the sweetening substance is a sweetener.

6. Mayonnaise-like edible sauce according to any one of claims 1 to 5, **characterised in that** the starch is a modified rice starch.

7. Edible preparation **characterised in that** it comprises, as a base ingredient, the mayonnaise-like sauce according to any one of claims 1 to 6.

8. Method for preparing a mayonnaise-like edible sauce according to one of claims 1 to 6, **characterised in that** it consists of mixing together all ingredients and bringing them to a temperature of greater than or equal to 80°C.
